# DEMANDE DE BREVET EUROPEEN

(11) **EP 4 350 832 A1**
(43) Date de publication de la demande: **10.04.2024**
(21) Numéro de dépôt: 23201860.6
(22) Date de dépôt: 05.10.2023
(51) Int. Cl.: H01M 10/052, H01M 10/0525, H01M 10/0562, H01M 10/058, H01M 50/107, H01M 4/36, H01M 4/38, H01M 4/48, H01M 4/485, H01M 4/58, H01M 4/587, H01M 10/04, H01M 4/04, H01M 4/66, H01M 4/75, H01M 4/62, H01M 4/02

(54) **CELLULE DE BATTERIE FILAIRE, ET SON PROCÉDÉ DE PRÉPARATION PAR ÉTIRAGE D'UNE PRÉFORME**

(30) Priorité: 06.10.2022 FR 2210265
(71) Demandeur: Commissariat à l'énergie atomique et aux énergies alternatives, 75015 Paris (FR)
(72) Inventeur: VAN ROEKEGHEM, Ambroise, 38054 GRENOBLE (FR); MARTINET, Sébastien, 38054 GRENOBLE (FR)
(74) Mandataire: Gevers & Orès

(57) **Abrégé**

La présente invention concerne une cellule de batterie filaire, et son procédé de préparation, notamment par étirage d'une préforme. L'invention concerne également une batterie comprenant au moins une de ces cellules de batterie filaire. L'invention vise également ladite préforme en tant que telle, ainsi que son procédé de préparation.

## Description

La présente invention concerne une cellule de batterie filaire, et son procédé de préparation, notamment par étirage d'une préforme. L'invention concerne également une batterie comprenant au moins une de ces cellules de batterie filaire. L'invention vise également ladite préforme en tant que telle, ainsi que son procédé de préparation.

Depuis quelques années, les besoins en énergie se sont multipliés et de nombreuses recherches sont menées pour, non seulement, améliorer les performances des batteries, mais aussi pour optimiser leur architecture, et notamment pour les miniaturiser et/ou pour en moduler leur forme.

La miniaturisation des batteries, par exemple sous forme plate, représente un enjeu majeur et un défi récurrent, notamment pour des applications dans l'électronique dite grand public, par exemple celle des appareils électroniques miniaturisés, comme le marché des téléphones portables, des tablettes, etc. Dans ce secteur, des batteries dont le poids est de quelques grammes, voire de quelques milligrammes seulement, sont communément utilisées.

Il est en outre de plus en plus nécessaire de disposer de batteries aux formes diverses, adaptées aux différentes tailles et formes des appareils électroniques.

Des efforts conséquents ont ainsi été mis en oeuvre pour développer une batterie ayant une certaine flexibilité, qui peut notamment être pliée ou courbée, au contraire des batteries existantes de forme bâton ou bouton.

Récemment, une nouvelle famille de batterie est apparue : il s'agit des batteries sous forme de fils, aussi appelées batteries filaires. Ce nouveau type de batterie est susceptible de répondre aux besoins croissants de miniaturisation et de flexibilité.

Les batteries filaires ont l'avantage de pouvoir se loger dans des espaces très réduits, très fins, ou de forme particulière. Si le fil est suffisamment fin et résistant, il est par exemple possible d'intégrer ces batteries filaires dans des vêtements. Elles peuvent également être intégrées dans des câbles, par exemple en combinaison avec des capteurs.

Cependant, il est difficile de produire des batteries filaires à grande échelle. En effet, il est notamment extrêmement long et délicat de produire de telles batteries qui sont généralement de très faible diamètre (de l'ordre de la centaine de microns), en particulier sur des longueurs importantes, qui peuvent dépasser le kilomètre.

Un objectif de l'invention est ainsi de fournir une méthode de préparation de batteries filaires qui soit à la fois facile à mettre en oeuvre et susceptible de permettre l'obtention de batteries de grande longueur, jusqu'à 1000 kilomètres environ.

Un autre objectif de l'invention est de fournir des dispositifs de départ, appelés préformes, susceptibles de former par étirage ces batteries filaires.

Ainsi, l'invention concerne une cellule de batterie filaire constituée de ou comprenant :
(i) une électrode filaire, constituée de ou comprenant un matériau de formule (I) ou un matériau (III₀) ;
(ii) une couche d'électrolyte solide positionnée autour d'au moins une partie de l'électrode filaire i), constituée de ou comprenant :
   - un matériau de formule (IIa) suivante :

      Li₄SiO₄ (IIa),
   - un composé du système Li₂O-SiO₂-P₂O₅,
   - un composé du système Li₃PO₄-N₂-SiO₂,
   - un matériau de formule (IIb) suivante :

      LiTi₂(PO₄)₃ (IIb),

      ce matériau étant éventuellement dopé, notamment avec Al, le matériau dopé étant par exemple de formule Li_{1.3}Ti_{1.7}Al_{0.3}P₃O₁₂ ;
(iii) une couche d'électrode positionnée autour d'au moins une partie de la couche d'électrolyte solide (ii), constituée de ou comprenant un matériau (III₀) ou un matériau de formule (I) ;

le matériau de formule (I) étant de formule suivante :

   (A₂O)ₐ₁-(A'O)ₐ₂-(M_{y1}O_{y2})_{b}-(M'_{z1}O_{z2})_{c} (I),

   dans laquelle :
   y1 est tel que 0 ≤ y1 ≤ 1 ;
   y2 est tel que 0 ≤ y2 ≤ 1 ;
   z1 est tel que 0 ≤ z1 ≤ 1 ;
   z2 est tel que 0 ≤ z2 ≤ 1 ;
   a1 est tel que 0 ≤ a1 ≤ 1 ;
   a2 est tel que 0 ≤ a2 ≤ 1, avec a1 et a2 n'étant pas simultanément 0 ;
   b est tel que 0 < b ≤ 1 ;
   c est tel que 0 < c ≤ 1 ;
   A est choisi parmi Li, Na et K ;
   A' est Mg ou Ca ;
   M est choisi parmi B, Al, Si, P, S, Se et leurs combinaisons;
   M' est choisi parmi les métaux de transition, notamment Ti, V, Cr, Mn, Fe, Co, Ni,
   Cu, Nb, Mo, et W ; Zn ; Pb et leurs combinaisons ;
le matériau (III₀) étant choisi parmi :
   - les matériaux de formule (III) suivante :

      SiOₓ (III),

      avec x tel que 0<x<2, en particulier 0,5<x<1,6, plus particulièrement 0,8<x<1,2, x étant notamment de 1 ;
   - le lithium métal ;
   - les composés du systèmes Li_{w}Si : LiO₂, avec w>0, lesquels comprennent optionnellement, en sus, du titane, ledit composé étant notamment de formule Li₂TiSiO₅ ;
   - du fluorophosphate d'étain ; et
   - le carbone amorphe ;
à la condition que :
   - si l'électrode filaire (i) est constituée de ou comprend un matériau de formule (I), alors la couche (iii) est constituée de ou comprend un matériau (III₀) ; et
   - si l'électrode filaire (i) est constituée de ou comprend un matériau (III₀), alors la couche (iii) est constituée de ou comprend un matériau de formule (I).

Selon un mode de réalisation particulier, la présente invention concerne une cellule de batterie filaire constituée de ou comprenant :
(i) une électrode filaire positive constituée de ou comprenant un matériau de formule (I) suivante :

   (A₂O)ₐ₁-(A'O)ₐ₂-(M_{y1}O_{y2})_{b}-(M'_{z1}O_{z2})_{c} (I),

   dans laquelle :
   y1 est tel que 0 ≤ y1 ≤ 1 ;
   y2 est tel que 0 ≤ y2 ≤ 1 ;
   z1 est tel que 0 ≤ z1 ≤ 1 ;
   z2 est tel que 0 ≤ z2 ≤ 1 ;
   a1 est tel que 0 ≤ a1 ≤ 1 ;
   a2 est tel que 0 ≤ a2 ≤ 1, avec a1 et a2 n'étant pas simultanément 0 ;
   b est tel que 0 < b ≤ 1 ;
   c est tel que 0 < c ≤ 1 ;
   A est choisi parmi Li, Na et K ;
   A' est Mg ou Ca ;
   M est choisi parmi B, Al, Si, P, S, Se et leurs combinaisons;
   M' est choisi parmi les métaux de transition, notamment Ti, V, Cr, Mn, Fe, Co, Ni,
   Cu, Nb, Mo, et W ; Zn ; Pb et leurs combinaisons ;
(ii) une couche d'électrolyte solide positionnée autour d'au moins une partie de l'électrode filaire positive i), constituée de ou comprenant :
   - un matériau de formule (IIa) suivante :

      Li₄SiO₄ (IIa),
   - un composé du système Li₂O-SiO₂-P₂O₅,
   - un composé du système Li₃PO₄-N₂-SiO₂,
   - un matériau de formule (IIb) suivante :

      LiTi₂(PO₄)₃ (IIb),

      ce matériau étant éventuellement dopé, notamment avec Al, le matériau dopé étant par exemple de formule Li_{1.3}Ti_{1.7}Al_{0.3}P₃O₁₂ ;
(iii) une couche d'électrode négative positionnée autour d'au moins une partie de la couche d'électrolyte solide ii), constituée de ou comprenant un matériau choisi parmi :
   - les matériaux de formule (III) suivante :

      SiOₓ (III),

      avec x tel que 0<x<2, en particulier 0,5<x<1,6, plus particulièrement 0,8<x<1,2, x étant notamment de 1 ;
   - le lithium métal ;
   - les composés du systèmes Li_{w}Si : LiO₂, avec w>0, lesquels comprennent optionnellement, en sus, du titane, ledit composé étant notamment de formule Li₂TiSiO₅ ;
   - du fluorophosphate d'étain ; et
   - le carbone amorphe.

Selon un mode de réalisation particulier, la présente invention concerne une cellule de batterie filaire constituée de ou comprenant :
(i) une électrode négative filaire, constituée de ou comprenant un matériau choisi parmi :
   - les matériaux de formule (III) suivante :

      SiOₓ (III),

      avec x tel que 0<x<2, en particulier 0,5<x<1,6, plus particulièrement 0,8<x<1,2, x étant notamment de 1 ;
   - le lithium métal ;
   - les composés du systèmes Li_{w}Si : LiO₂, avec w>0, lesquels comprennent optionnellement, en sus, du titane, ledit composé étant notamment de formule Li₂TiSiO₅ ; du fluorophosphate d'étain ; et
   - le carbone amorphe.
(ii) une couche d'électrolyte solide positionnée autour d'au moins une partie de l'électrode filaire négative (i), constituée de ou comprenant :
   - un matériau de formule (IIa) suivante :

      Li₄SiO₄ (IIa),
   - un composé du système Li₂O-SiO₂-P₂O₅,
   - un composé du système Li₃PO₄-N₂-SiO₂,
   - un matériau de formule (IIb) suivante :

      LiTi₂(PO₄)₃ (IIb),

      ce matériau étant éventuellement dopé, notamment avec Al, le matériau dopé étant par exemple de formule Li_{1.3}Ti_{1.7}Al_{0.3}P₃O₁₂ ;
(iii) une couche d'électrode positive positionnée autour d'au moins une partie de la couche d'électrolyte solide (ii), constituée de ou comprenant un matériau de formule (I) suivante :

   (A₂O)ₐ₁-(A'O)ₐ₂-(M_{y1}O_{y2})_{b}-(M'_{z1}O_{z2})_{c} (I),

   dans laquelle :
   y1 est tel que 0 ≤ y1 ≤ 1 ;
   y2 est tel que 0 ≤ y2 ≤ 1 ;
   z1 est tel que 0 ≤ z1 ≤ 1 ;
   z2 est tel que 0 ≤ z2 ≤ 1 ;
   a1 est tel que 0 ≤ a1 ≤ 1 ;
   a2 est tel que 0 ≤ a2 ≤ 1, avec a1 et a2 n'étant pas simultanément 0 ;
   b est tel que 0 < b ≤ 1 ;
   c est tel que 0 < c ≤ 1 ;
   A est choisi parmi Li, Na et K ;
   A' est Mg ou Ca ;
   M est choisi parmi B, Al, Si, P, S, Se et leurs combinaisons;
   M' est choisi parmi les métaux de transition, notamment Ti, V, Cr, Mn, Fe, Co, Ni,
   Cu, Nb, Mo, et W ; Zn ; Pb et leurs combinaisons.

Selon un mode de réalisation particulier, A est Li.

Selon un mode de réalisation particulier, a1 est non nul.

Selon un mode de réalisation particulier, a2 est égal à 0.

Selon un mode de réalisation particulier, A est Li, et a2 est égal à 0.

Selon un mode de réalisation particulier, M est P ou Si.

Selon un mode de réalisation particulier, M' est Fe, Mn, V et leurs combinaisons, notamment Fe, Mn et leurs combinaisons, ou Fe, V, et leurs combinaisons.

Selon un mode de réalisation particulier, M est P ou Si, et M' est Fe, Mn, V et leurs combinaisons, notamment Fe, Mn et leurs combinaisons, ou Fe, V, et leurs combinaisons.

Selon un mode de réalisation particulier, A est Li, a2 est égal à 0, M est P ou Si, et M' est Fe, Mn, V et leurs combinaisons, notamment Fe, Mn et leurs combinaisons, ou Fe, V, et leurs combinaisons.

Selon un mode de réalisation particulier, l'électrode positive est constituée de ou comprend un matériau du système V₂O₅-P₂O₅-Fe₂O₃-Li₂O.

Selon un mode de réalisation particulier, l'électrode positive est constituée de ou comprend un matériau est de formule 70,3V₂O₅-10P₂O₅-10Fe₂O₃-10,7Li₂O, correspondant notamment à un matériau de formule (I), avec A=Li ; a1=0,15 ; a2=0 ; M=P ; y1=0,4 ; y2=1 ; b=0,14 ; M'_{z1} représentant V_{0,37}Fe_{0,05} ; z2=1 ; c=1.

Selon un mode de réalisation particulier, l'électrode positive est constituée de ou comprend un matériau de formule (I) suivante :

(Li₂O)ₐ₁-(P_{2/5}O)_{b}-(Fe_{2/3}O)_{c1}(V_{2/5}O)_{c2} (I),

avec c1+c2=c.

Selon un mode de réalisation particulier, l'électrode positive est constituée de ou comprend un matériau du système Li₂O-V₂O₅-P₂O₅.

Selon un mode de réalisation particulier, l'électrode positive est constituée de ou comprend un matériau de formule (I) suivante :

(Li₂O)ₐ₁-(P_{2/5}O)_{b}-(V_{2/5}O)_{c} (I).

Selon un mode de réalisation particulier, l'électrode positive est constituée de ou comprend un matériau est de formule 25Li₂O-50V₂O₅-25P₂O₅, correspondant notamment à un matériau de formule (I), avec A=Li ; a1=0,25 ; a2=0 ; M=P ; y1=2 ; y2=5 (ou y1=2/5 ; y2=1); b=0,25 ; M' représentant V, z1=2, z2 = 5 (ou z1=2/5, z2 = 1) et c=0,5.

Un tel matériau est par exemple décrit par Dollé et al. (Solid State Ionics 237 (2013) 22-27).

Selon un mode de réalisation particulier, l'électrode positive est constituée de ou comprend un matériau est de formule 25Li₂O-17,5Fe₂O₃-15MnO₂-50SiO₂, correspondant notamment à un matériau de formule (I), avec A=Li ; a1=0,30 ; a2=0 ; M=Si ; y1=0,50 ; y2=1 ; b=0,61 ; M'_{z1} représentant Fe_{0,42}Mn_{0,18} ; z2=1 ; c=1.

Selon un mode de réalisation particulier, l'électrode positive est constituée de ou comprend un matériau est de formule 25Li₂O-25Fe₂O₃-50SiO₂, correspondant notamment à un matériau de formule (I), avec A = Li, a1=0,25, M représentant Si, y1=1 et yz2=2 (ou y1=1/2 et yz2=1) et b=0,5, M' représente Fe, z1=2 et z2=3 (ou z1=2/3 et z2=1), c=0,25.

Selon un mode de réalisation particulier, l'électrode positive est constituée de ou comprend un matériau est de formule 25Li₂O-25MnO₂-50SiO₂, correspondant notamment à un matériau de formule (I), avec A = Li, a1=0,25, M représentant Si, y1=1 et yz2=2 (ou y1=1/2 et yz2=1) et b=0,5, M' représente Mn, z1=1 et z2=2 (ou z1=1/2 et z2=1), c=0,25.

Selon un mode de réalisation particulier, l'électrode négative est constituée de ou comprenant un matériau de formule (III) suivante :

SiOₓ (III),

avec x tel que 0<x<2, en particulier 0,5<x<1,6, plus particulièrement 0,8<x<1,2, x étant notamment de 1.

Selon un mode de réalisation particulier, l'électrode filaire (i) renferme un collecteur de courant intérieur filaire (i₀).

Selon un mode de réalisation plus particulier, le collecteur de courant intérieur filaire (i₀) est constitué de ou comprend un matériau choisi parmi les métaux ayant une température de fusion comprise de 1500°C à 2500°C, notamment Sc, Y, Lu, Ti, Zr, Hf, V, Nb, Cr, Mn, Tc, Fe, Ru, Rh, Ir, Pd, Pt et leurs combinaisons, par exemple Pt, et parmi Ni, Al, Cu, Pt, Au, Ag, acier, notamment acier inoxydable, et oxyde d'indium-étain (ITO).

Par exemple, le collecteur de courant intérieur filaire (i₀) est constitué de ou comprend de l'acier, en particulier l'acier inoxydable, ou Ni.

Lorsque le matériau de l'électrode (i) est conducteur électrique, par exemple constitué de ou comprend du lithium, le collecteur de courant intérieur filaire (i₀) peut être omis.

Selon un mode de réalisation particulier, une couche de collecteur de courant externe (iv) est positionnée autour d'au moins une partie de la couche d'électrode (iii).

Selon un mode de réalisation plus particulier, le collecteur de courant extérieur filaire (iv) est constitué de ou comprend un matériau choisi parmi les métaux ayant une température de fusion comprise de 100°C à 700°C, notamment Li, Sn, Al, Zn, et Pb, et parmi Cu, Pt, Au, Ag, acier, notamment acier inoxydable, et oxyde d'indium-étain (ITO).

Par exemple, le collecteur de courant extérieur filaire (iv) est constitué de ou comprend Li, Sn, Al, Zn, et Pb, en particulier Al.

Lorsque le matériau de l'électrode (iii) est conducteur électrique, par exemple constitué de ou comprend du lithium, le collecteur de courant extérieur filaire (iv) peut être omis.

Selon un mode de réalisation particulier, une couche protectrice (v) est positionnée autour d'au moins une partie de la couche d'électrode négative (iii), ou, lorsqu'elle existe, d'au moins une partie de la couche de collecteur de courant extérieur filaire (iv).

Selon un mode de réalisation particulier, une couche protectrice (v) est positionnée autour d'au moins une partie de la couche d'électrode positive (iii), ou, lorsqu'elle existe, d'au moins une partie de la couche de collecteur de courant extérieur filaire (iv).

Selon un mode de réalisation plus particulier, la couche protectrice (v) est une couche isolante.

Selon un autre mode de réalisation plus particulier, la couche protectrice (v) est une résine, en particulier :
- Une résine thermoplastique telle que le polyéthylène, le polypropylène, le chlorure de polyvinyle, le polystyrène, l'acétate de polyvinyle, le polyuréthane thermoplastique ou le Téflon;
- Une résine thermodurcissable telle qu'une résine phénolique, une résine époxy, une résine mélamine, une résine urée, une résine polyester insaturé, une résine alkyde, un polyuréthane, ou un polyimide thermodurcissable ;
- Une résine photodurcissable.

Selon un mode de réalisation particulier, l'invention concerne une cellule de batterie filaire constituée de ou comprenant :
(i₀) un collecteur de courant intérieur filaire ;
(i) une couche d'électrode positive positionnée autour d'au moins une partie du collecteur de courant intérieur filaire (i₀), constituée de ou comprenant un matériau de formule (I) suivante :

   (A₂O)ₐ₁-(A'O)ₐ₂-(M_{y1}O_{y2})_{b}-(M'_{z1}O_{z2})_{c} (I),

   dans laquelle :
   y1 est tel que 0 ≤ y1 ≤ 1 ;
   y2 est tel que 0 ≤ y2 ≤ 1 ;
   z1 est tel que 0 ≤ z1 ≤ 1 ;
   z2 est tel que 0 ≤ z2 ≤ 1 ;
   a1 est tel que 0 ≤ a1 ≤ 1 ;
   a2 est tel que 0 ≤ a2 ≤ 1, avec a1 et a2 n'étant pas simultanément 0 ;
   b est tel que 0 < b ≤ 1 ;
   c est tel que 0 < c ≤ 1 ;
   A est choisi parmi Li, Na et K ;
   A' est Mg ou Ca ;
   M est choisi parmi B, Al, Si, P, S, Se et leurs combinaisons;
   M' est choisi parmi les métaux de transition, notamment Ti, V, Cr, Mn, Fe, Co, Ni,
   Cu, Nb, Mo, et W ; Zn ; Pb et leurs combinaisons;
(ii) une couche d'électrolyte solide positionnée autour d'au moins une partie de l'électrode filaire positive i), constituée de ou comprenant :
   - un matériau de formule (IIa) suivante :

      Li₄SiO₄ (IIa),
   - un composé du système Li₂O-SiO₂-P₂O₅,
   - un composé du système Li₃PO₄-N₂-SiO₂,
   - un matériau de formule (IIb) suivante :

      LiTi₂(PO₄)₃ (IIb),

      ce matériau étant éventuellement dopé, notamment avec Al, le matériau dopé étant par exemple de formule Li_{1.3}Ti_{1.7}Al_{0.3}P₃O₁₂ ;
(iii) une couche d'électrode négative positionnée autour d'au moins une partie de la couche d'électrolyte solide ii), constituée de ou comprenant un matériau choisi parmi :
   - les matériaux de formule (III) suivante :

      SiOₓ (III),

      avec x tel que 0<x<2, en particulier 0,5<x<1,6, plus particulièrement 0,8<x<1,2, x étant notamment de 1 ;
   - le lithium métal ;
   - les composés du systèmes Li_{w}Si : LiO₂, avec w>0, lesquels comprennent optionnellement, en sus, du titane, ledit composé étant notamment de formule Li₂TiSiO₅ ;
   - du fluorophosphate d'étain ; et
   - le carbone amorphe ;
(iv) optionnellement, une couche de collecteur de courant externe, positionnée autour d'au moins une partie de la couche d'électrode (iii) ;
(v) optionnellement, une couche protectrice (v) positionnée autour d'au moins une partie de la couche d'électrode négative (iii), ou, lorsqu'elle existe, d'au moins une partie de la couche de collecteur de courant extérieur filaire (iv).

Selon un mode de réalisation particulier, l'invention concerne une cellule de batterie filaire constituée de ou comprenant :
(i₀) un collecteur de courant intérieur filaire ;
(i) une couche d'électrode négative positionnée autour d'au moins une partie du collecteur de courant intérieur filaire (i₀), constituée de ou comprenant un matériau choisi parmi :
   - les matériaux de formule (III) suivante :

      SiOₓ (III),

      avec x tel que 0<x<2, en particulier 0,5<x<1,6, plus particulièrement 0,8<x<1,2, x étant notamment de 1 ;
   - le lithium métal ;
   - les composés du systèmes Li_{w}Si : LiO₂, avec w>0, lesquels comprennent optionnellement, en sus, du titane, ledit composé étant notamment de formule Li₂TiSiO₅ ;du fluorophosphate d'étain ; et
   - le carbone amorphe.
(ii) une couche d'électrolyte solide positionnée autour d'au moins une partie de l'électrode filaire négative i), constituée de ou comprenant :
   - un matériau de formule (IIa) suivante :

      Li₄SiO₄ (IIa),
   - un composé du système Li₂O-SiO₂-P₂O₅,
   - un composé du système Li₃PO₄-N₂-SiO₂,
   - un matériau de formule (IIb) suivante :

      LiTi₂(PO₄)₃ (IIb),

      ce matériau étant éventuellement dopé, notamment avec Al, le matériau dopé étant par exemple de formule Li_{1.3}Ti_{1.7}Al_{0.3}P₃O₁₂ ;
(iii) une couche d'électrode positive positionnée autour d'au moins une partie de la couche d'électrolyte solide (ii), constituée de ou comprenant un matériau de formule (I) suivante :

   (A₂O)ₐ₁-(A'O)ₐ₂-(M_{y1}O_{y2})_{b}-(M'_{z1}O_{z2})_{c} (I),

   dans laquelle :
   y1 est tel que 0 ≤ y1 ≤ 1 ;
   y2 est tel que 0 ≤ y2 ≤ 1 ;
   z1 est tel que 0 ≤ z1 ≤ 1 ;
   z2 est tel que 0 ≤ z2 ≤ 1 ;
   a1 est tel que 0 ≤ a1 ≤ 1 ;
   a2 est tel que 0 ≤ a2 ≤ 1, avec a1 et a2 n'étant pas simultanément 0 ;
   b est tel que 0 < b ≤ 1 ;
   c est tel que 0 < c ≤ 1 ;
   A est choisi parmi Li, Na et K ;
   A' est Mg ou Ca ;
   M est choisi parmi B, Al, Si, P, S, Se et leurs combinaisons;
   M' est choisi parmi les métaux de transition, notamment Ti, V, Cr, Mn, Fe, Co, Ni,
   Cu, Nb, Mo, et W ; Zn ; Pb et leurs combinaisons ;
(iv) optionnellement, une couche de collecteur de courant externe, positionnée autour d'au moins une partie de la couche d'électrode (iii) ;
(v) optionnellement, une couche protectrice (v) positionnée autour d'au moins une partie de la couche d'électrode négative (iii), ou, lorsqu'elle existe, d'au moins une partie de la couche de collecteur de courant extérieur filaire (iv).

La cellule de batterie filaire de la présente invention est de préférence flexible. Elle peut ainsi facilement épouser la forme de l'espace de stockage cible.

Par « flexible », on entend en particulier que la cellule de batterie filaire de l'invention n'est pas cassée même si elle est déformée jusqu'à ce que son rayon de courbure atteigne 50 mm.

Selon un mode de réalisation particulier, la plus grande dimension de la coupe transversale de la cellule de batterie filaire est comprise de 5 µm à 5 mm, en particulier de 5 µm à 1 ou 3 mm.

Selon un mode de réalisation particulier, la plus grande dimension de la coupe transversale de la cellule de batterie filaire est comprise de 5 µm à 3 ou 5 mm, ladite cellule comprenant une couche protectrice (v).

Selon un mode de réalisation particulier, la plus grande dimension de la coupe transversale de la cellule de batterie filaire est comprise de 5 µm à 1 mm, ladite cellule étant dépourvue de couche protectrice (v).

Cette dimension peut par exemple être obtenue en mesurant la plus grande dimension de la section perpendiculaire à la direction longitudinale de la cellule de batterie filaire en un nombre donné de points choisis au hasard, par exemple 10, et en prenant la valeur moyenne à partir de ceux-ci.

Dans la cellule de batterie de filaire selon la présente invention, la forme de la section perpendiculaire à la direction longitudinale n'est pas limitée à un cercle, et peut être une forme elliptique ou une forme polygonale, par exemple carrée.

Selon un mode de réalisation particulier, la cellule de batterie filaire a un profil en coupe transversale circulaire.

Selon un mode de réalisation plus particulier, la cellule de batterie filaire a un profil en coupe transversale circulaire dont le diamètre est compris de 5 µm à 5 mm, en particulier de 5 µm à 1 ou 3 mm.

Selon un mode de réalisation particulier, la cellule de batterie filaire a un profil en coupe transversale circulaire dont le diamètre est compris de 5 µm à 3 ou 5 mm, ladite cellule comprenant une couche protectrice (v).

Selon un mode de réalisation particulier, la cellule de batterie filaire a un profil en coupe transversale circulaire dont le diamètre est compris de 5 µm à 1 mm, ladite cellule étant dépourvue de couche protectrice (v).

La longueur de la cellule de batterie filaire de la présente invention dans la direction longitudinale n'est pas particulièrement limitée, mais elle est de préférence de 1 mm ou plus.

Selon un mode de réalisation particulier, la longueur de la cellule de batterie filaire est comprise de 1 cm à 2 m.

Dans la cellule de batterie filaire selon la présente invention, le rapport entre le diamètre et la longueur n'est pas particulièrement limité. Toutefois, le rapport [(longueur)/(diamètre)] est de préférence égal ou supérieur à 5.

Selon un mode de réalisation particulier, le matériau de formule (I), le matériau de formule (II), et/ou le matériau de formule (III) sont amorphes.

Selon un autre aspect, l'invention concerne également une batterie comprenant au moins une cellule de batterie filaire telle que définie précédemment.

Selon un mode de réalisation particulier, la batterie selon l'invention comprend un composant alimentable ayant au moins un ensemble de contacts électriques positif et négatif, les électrodes de la au moins une cellule, ou les collecteurs de courant lorsqu'ils existent, étant interconnectés à l'ensemble de contacts électriques positif et négatif, formant ainsi un circuit complet.

Selon un mode de réalisation particulier, la batterie selon l'invention comprend une pluralité de cellules de batterie filaire telles que définies précédemment.

En particulier, cette pluralité de cellules de batterie filaire est organisée en un ou plusieurs faisceaux.

Selon un autre aspect, l'invention concerne également un procédé de préparation d'une cellule de batterie filaire telle que défini précédemment, comprenant une étape (A) d'étirage d'une préforme constituée de ou comprenant les éléments (i), (ii), (iii), et, le cas échéant (i₀), tels que définis précédemment, avec en particulier l'élément (i) étant l'électrode positive et l'élément (iii) étant l'électrode négative.

Selon un mode de réalisation particulier, l'étirage se fait à une température allant de 1500 à 2500°C, par exemple à environ 2000°C.

Selon un mode de réalisation particulier, l'étirage se fait par gravité et/ou action mécanique, en particulier par gravité puis action mécanique.

Selon un mode de réalisation particulier, la préforme a un diamètre allant de 1 cm à 30 cm, par exemple d'environ 10 cm, et/ou une longueur de 5 cm à 2 mètres, par exemple d'environ 1 mètre.

Selon un mode de réalisation particulier, l'invention concerne un procédé tel que défini précédemment comprenant une étape (B) de formation de la couche (iv) autour de la couche (iii), par exemple par chemisage ou passage dans un bain d'un matériau choisi parmi Al, Cu, Pt, Au, Ag, acier, notamment acier inoxydable, et oxyde d'indium-étain (ITO), fondu, ou extrusion, plus particulièrement par passage dans un bain d'un matériau choisi parmi les métaux ayant une température de fusion comprise de 100°C à 700°C, notamment Li, Sn, Al, Zn, et Pb, fondu, ou par chemisage en cuivre ou en acier inoxydable, ou par chemisage en cuivre ou en acier inoxydable.

Selon un mode de réalisation particulier, l'invention concerne un procédé tel que défini précédemment, comprenant une étape (C) de formation de la couche (v) autour de la couche (iii) ou de la couche (iv), par exemple par enduction.

Selon un autre aspect, l'invention concerne également un procédé de préparation d'une cellule de batterie filaire telle que défini précédemment, comprenant une étape (A') d'étirage d'une préforme constituée de ou comprenant les éléments (i), (ii), et, le cas échéant (i₀), tels que définis précédemment pour la cellule, avec en particulier l'élément (i) étant l'électrode négative et l'élément (iii) étant l'électrode positive.

Selon un mode de réalisation particulier, l'étirage se fait à une température allant de 1500 à 2500°C, par exemple à environ 2000°C.

Selon un mode de réalisation particulier, l'étirage se fait par gravité et/ou action mécanique, en particulier par gravité puis action mécanique.

Selon un mode de réalisation particulier, la préforme a un diamètre allant de 1 cm à 30 cm, par exemple d'environ 10 cm, et/ou une longueur de 5 cm à 2 mètres, par exemple d'environ 1 mètre.

Selon un mode de réalisation particulier, l'invention concerne un procédé tel que défini précédemment, comprenant une étape (B') de formation de la couche (iii) autour de la couche (ii), par exemple par passage dans un bain de composé de formule (I) ou (III), fondu, ou par extrusion.

En particulier, l'extrusion pour l'enduction de câbles ou de fibres est un procédé largement utilisé dans l'industrie et bien connu de l'homme du métier.

Selon un mode de réalisation particulier, l'invention concerne un procédé tel que défini précédemment, comprenant une étape (C') de formation de la couche (iv) autour de la couche (iii), par exemple par chemisage ou passage dans un bain d'un matériau choisi parmi Al, Cu, Pt, Au, Ag, acier, notamment acier inoxydable, et oxyde d'indium-étain (ITO), fondu, ou extrusion, plus particulièrement par passage dans un bain d'un matériau choisi parmi les métaux ayant une température de fusion comprise de 100°C à 700°C, notamment Li, Sn, Al, Zn, et Pb, fondu, ou par chemisage en cuivre ou en acier inoxydable.

Selon un mode de réalisation particulier, l'invention concerne un procédé tel que défini précédemment, comprenant une étape (D') de formation de la couche (v) autour de la couche (iii) ou de la couche (iv), par exemple par enduction.

Selon un autre aspect, l'invention concerne également une préforme constituée de ou comprenant les éléments (i), (ii), et, le cas échéant (i₀) et/ou (iii), dont la plus grande dimension de sa coupe transversale est comprise entre 1 cm et 30 cm en particulier environ 10 cm.

Selon un mode de réalisation particulier, la préforme est constituée de ou comprend :
(i) une électrode positive constituée de ou comprenant un matériau de formule (I) suivante :

   (A₂O)ₐ₁-(A'O)ₐ₂-(M_{y1}O_{y2})_{b}-(M'_{z1}O_{z2})_{c} (I),

   dans laquelle :
   y1 est tel que 0 ≤ y1 ≤ 1 ;
   y2 est tel que 0 ≤ y2 ≤ 1 ;
   z1 est tel que 0 ≤ z1 ≤ 1 ;
   z2 est tel que 0 ≤ z2 ≤ 1 ;
   a1 est tel que 0 ≤ a1 ≤ 1 ;
   a2 est tel que 0 ≤ a2 ≤ 1, avec a1 et a2 n'étant pas simultanément 0 ;
   b est tel que 0 < b ≤ 1 ;
   c est tel que 0 < c ≤ 1 ;
   A est choisi parmi Li, Na et K ;
   A' est Mg ou Ca ;
   M est choisi parmi B, Al, Si, P, S, Se et leurs combinaisons;
   M' est choisi parmi les métaux de transition, notamment Ti, V, Cr, Mn, Fe, Co, Ni,
   Cu, Nb, Mo, et W ; Zn ; Pb et leurs combinaisons ;
(ii) une couche d'électrolyte solide positionnée autour d'au moins une partie de l'électrode filaire positive i), constituée de ou comprenant :
   - un matériau de formule (IIa) suivante :

      Li₄SiO₄ (IIa),
   - un composé du système Li₂O-SiO₂-P₂O₅,
   - un composé du système Li₃PO₄-N₂-SiO₂,
   - un matériau de formule (IIb) suivante :

      LiTi₂(PO₄)₃ (IIb),

      ce matériau étant éventuellement dopé, notamment avec Al, le matériau dopé étant par exemple de formule Li_{1.3}Ti_{1.7}Al_{0.3}P₃O₁₂ ;
(iii) une couche d'électrode négative positionnée autour d'au moins une partie de la couche d'électrolyte solide ii), constituée de ou comprenant un matériau choisi parmi :
   - les matériaux de formule (III) suivante :

      SiOₓ (III),

      avec x tel que 0<x<2, en particulier 0,5<x<1,6, plus particulièrement 0,8<x<1,2, x étant notamment de 1 ;
   - le lithium métal ;
   - les composés du systèmes Li_{w}Si : LiO₂, avec w>0, lesquels comprennent optionnellement, en sus, du titane, ledit composé étant notamment de formule Li₂TiSiO₅ ; du fluorophosphate d'étain ; et
   - le carbone amorphe ;
   dont la plus grande dimension de sa coupe transversale est comprise de 1 cm à 30 cm, en particulier environ 10 cm.

Selon un autre mode de réalisation particulier, la préforme est constituée de ou comprend :
(i₀) un collecteur de courant intérieur ;
(i) une couche d'électrode positive positionnée autour d'au moins une partie du collecteur de courant intérieur (i₀), constituée de ou comprenant un matériau de formule (I) suivante :

   (A₂O)ₐ₁-(A'O)ₐ₂-(M_{y1}O_{y2})_{b}-(M'_{z1}O_{z2})_{c} (I),

   dans laquelle :
   y1 est tel que 0 ≤ y1 ≤ 1 ;
   y2 est tel que 0 ≤ y2 ≤ 1 ;
   z1 est tel que 0 ≤ z1 ≤ 1 ;
   z2 est tel que 0 ≤ z2 ≤ 1 ;
   a1 est tel que 0 ≤ a1 ≤ 1 ;
   a2 est tel que 0 ≤ a2 ≤ 1, avec a1 et a2 n'étant pas simultanément 0 ;
   b est tel que 0 < b ≤ 1 ;
   c est tel que 0 < c ≤ 1 ;
   A est choisi parmi Li, Na et K ;
   A' est Mg ou Ca ;
   M est choisi parmi B, Al, Si, P, S, Se et leurs combinaisons;
   M' est choisi parmi les métaux de transition, notamment Ti, V, Cr, Mn, Fe, Co, Ni,
   Cu, Nb, Mo, et W ; Zn ; Pb et leurs combinaisons ;
(ii) une couche d'électrolyte solide positionnée autour d'au moins une partie de l'électrode filaire positive i), constituée de ou comprenant :
   - un matériau de formule (IIa) suivante :

      Li₄SiO₄ (IIa),
   - un composé du système Li₂O-SiO₂-P₂O₅,
   - un composé du système Li₃PO₄-N₂-SiO₂,
   - un matériau de formule (IIb) suivante :

      LiTi₂(PO₄)₃ (IIb),

      ce matériau étant éventuellement dopé, notamment avec Al, le matériau dopé étant par exemple de formule Li_{1.3}Ti_{1.7}Al_{0.3}P₃O₁₂ ;
(iii) une couche d'électrode négative positionnée autour d'au moins une partie de la couche d'électrolyte solide ii), constituée de ou comprenant un matériau choisi parmi :
   - les matériaux de formule (III) suivante :

      SiOₓ (III),

      avec x tel que 0<x<2, en particulier 0,5<x<1,6, plus particulièrement 0,8<x<1,2, x étant notamment de 1 ;
   - le lithium métal ;
   - les composés du systèmes Li_{w}Si : LiO₂, avec w>0, lesquels comprennent optionnellement, en sus, du titane, ledit composé étant notamment de formule Li₂TiSiO₅ ;du fluorophosphate d'étain ; et
   - le carbone amorphe ;
   dont la plus grande dimension de sa coupe transversale est comprise de 1 cm à 30 cm, en particulier environ 10 cm.

Selon un autre mode de réalisation particulier, la préforme est constituée de ou comprend :
(i) une électrode négative, constituée de ou comprenant un matériau choisi parmi :
   - les matériaux de formule (III) suivante :

      SiOₓ (III),

      avec x tel que 0<x<2, en particulier 0,5<x<1,6, plus particulièrement 0,8<x<1,2, x étant notamment de 1 ;
   - le lithium métal ;
   - les composés du systèmes Li_{w}Si : LiO₂, avec w>0, lesquels comprennent optionnellement, en sus, du titane, ledit composé étant notamment de formule Li₂TiSiO₅ ;
   - du fluorophosphate d'étain ; et
   - le carbone amorphe.
(ii) une couche d'électrolyte solide positionnée autour d'au moins une partie de l'électrode filaire négative i), constituée de ou comprenant :
   - un matériau de formule (IIa) suivante :

      Li₄SiO₄ (IIa),
   - un composé du système Li₂O-SiO₂-P₂O₅,
   - un composé du système Li₃PO₄-N₂-SiO₂,
   - un matériau de formule (IIb) suivante :

      LiTi₂(PO₄)₃ (IIb),

      ce matériau étant éventuellement dopé, notamment avec Al, le matériau dopé étant par exemple de formule Li_{1.3}Ti_{1.7}Al_{0.3}P₃O₁₂ ;
(iii) optionnellement, une couche d'électrode positive positionnée autour d'au moins une partie de la couche d'électrolyte solide (ii), constituée de ou comprenant un matériau de formule (I) suivante :

   (A₂O)ₐ₁-(A'O)ₐ₂-(M_{y1}O_{y2})_{b}-(M'_{z1}O_{z2})_{c} (I),

   dans laquelle :
   y1 est tel que 0 ≤ y1 ≤ 1 ;
   y2 est tel que 0 ≤ y2 ≤ 1 ;
   z1 est tel que 0 ≤ z1 ≤ 1 ;
   z2 est tel que 0 ≤ z2 ≤ 1 ;
   a1 est tel que 0 ≤ a1 ≤ 1 ;
   a2 est tel que 0 ≤ a2 ≤ 1, avec a1 et a2 n'étant pas simultanément 0 ;
   b est tel que 0 < b ≤ 1 ;
   c est tel que 0 < c ≤ 1 ;
   A est choisi parmi Li, Na et K ;
   A' est Mg ou Ca ;
   M est choisi parmi B, Al, Si, P, S, Se et leurs combinaisons;
   M' est choisi parmi les métaux de transition, notamment Ti, V, Cr, Mn, Fe, Co, Ni,
   Cu, Nb, Mo, et W ; Zn ; Pb et leurs combinaisons ;
   dont la plus grande dimension de sa coupe transversale est comprise de 1 cm à 30 cm, en particulier environ 10 cm.

Selon un autre mode de réalisation particulier, la préforme est constituée de ou comprend :
(i₀) un collecteur de courant intérieur filaire ;
(i) une couche d'électrode négative positionnée autour d'au moins une partie du collecteur de courant intérieur filaire (i₀), constituée de ou comprenant un matériau choisi parmi :
   - les matériaux de formule (III) suivante :

      SiOₓ (III),

      avec x tel que 0<x<2, en particulier 0,5<x<1,6, plus particulièrement 0,8<x<1,2, x étant notamment de 1 ;
   - le lithium métal ;
   - les composés du systèmes Li_{w}Si : LiO₂, avec w>0, lesquels comprennent optionnellement, en sus, du titane, ledit composé étant notamment de formule Li₂TiSiO₅ ;du fluorophosphate d'étain ; et
   - le carbone amorphe.
(ii) une couche d'électrolyte solide positionnée autour d'au moins une partie de l'électrode filaire négative i), constituée de ou comprenant :
   - un matériau de formule (IIa) suivante :

      Li₄SiO₄ (IIa),
   - un composé du système Li₂O-SiO₂-P₂O₅,
   - un composé du système Li₃PO₄-N₂-SiO₂,
   - un matériau de formule (IIb) suivante :

      LiTi₂(PO₄)₃ (IIb),

      ce matériau étant éventuellement dopé, notamment avec Al, le matériau dopé étant par exemple de formule Li_{1.3}Ti_{1.7}Al_{0.3}P₃O₁₂ ;
(iii) optionnellement, une couche d'électrode positive positionnée autour d'au moins une partie de la couche d'électrolyte solide (ii), constituée de ou comprenant un matériau de formule (I) suivante :

   (A₂O)ₐ₁-(A'O)ₐ₂-(M_{y1}O_{y2})_{b}-(M'_{z1}O_{z2})_{c} (I),

   dans laquelle :
   y1 est tel que 0 ≤ y1 ≤ 1 ;
   y2 est tel que 0 ≤ y2 ≤ 1 ;
   z1 est tel que 0 ≤ z1 ≤ 1 ;
   z2 est tel que 0 ≤ z2 ≤ 1 ;
   a1 est tel que 0 ≤ a1 ≤ 1 ;
   a2 est tel que 0 ≤ a2 ≤ 1, avec a1 et a2 n'étant pas simultanément 0 ;
   b est tel que 0 < b ≤ 1 ;
   c est tel que 0 < c ≤ 1 ;
   A est choisi parmi Li, Na et K ;
   A' est Mg ou Ca ;
   M est choisi parmi B, Al, Si, P, S, Se et leurs combinaisons;
   M' est choisi parmi les métaux de transition, notamment Ti, V, Cr, Mn, Fe, Co, Ni,
   Cu, Nb, Mo, et W ; Zn ; Pb et leurs combinaisons ;
   dont la plus grande dimension de sa coupe transversale est comprise de 1 cm à 30 cm, en particulier environ 10 cm.

En particulier, l'élément (i), ou lorsqu'il existe, l'élément (i₀), de la préforme est sous forme de fil, dont la plus grande dimension de sa coupe transversale est notamment comprise entre 100 microns et 1 cm.

Selon un mode de réalisation particulier, la ou les couches définies plus haut, en particulier les couches (i), (ii), (iii) et/ou (iv) ont une épaisseur comprise de 50 µm à 5 cm.

Selon un autre aspect, l'invention concerne également un procédé de préparation d'une préforme telle que définie précédemment, par dépôt des différentes couches en phase vapeur, notamment par des étapes de dépôt en phase vapeur choisies parmi le dépôt externe en phase vapeur (OVD), dépôt chimique en phase vapeur modifié (MCVD), dépôt chimique en phase vapeur plasma (PCVD), dépôt axial en phase vapeur (VAD).

Les dépôts se font, de façon bien connue de l'homme du métier, à l'aide des métaux et/ou oxydes correspondants aux matériaux des couches à déposer.

Selon un autre aspect, l'invention concerne également l'utilisation d'une cellule de batterie filaire telle que défini précédemment, dans les dispositifs électroniques, en particulier un dispositif électronique portatif, les vêtements, les fibres et les câbles, et dans le domaine médical, notamment dans un dispositif médical.

### DEFINITIONS

Tel qu'on l'entend ici, les plages de valeur sous forme de « x-y » ou « de x à y » ou « entre x et y » incluent les bornes x et y, ainsi que les entiers compris entre ces bornes. A titre d'exemple, « 1-5 », ou « de 1 à 5 » ou « entre 1 et 5 » désignent notamment les entiers 1, 2, 3, 4 et 5. Les modes de réalisations préférés incluent chaque entier pris individuellement dans la plage de valeur, ainsi que toute sous-combinaison de ces entiers. A titre d'exemple, les valeurs préférées pour « 1-5 » peuvent comprendre les entiers 1, 2, 3, 4, 5, 1-2, 1-3, 1-4, 1-5, 2-3, 2-4, 2-5, etc.

Tel qu'on l'utilise dans la présente description, le terme « environ » se réfère à un intervalle de valeurs de ± 10 % d'une valeur spécifique. A titre d'exemple, l'expression « environ 20 » comprend les valeurs de 20 ± 10 %, soit les valeurs de 18 à 22.

Au sens de la présente description, les pourcentages se réfèrent à des pourcentages en masse par rapport à la masse totale de la formulation, sauf indication contraire.

Par couche, on entend notamment une strate d'éléments superposés concentriques.

Dans toute la demande, y1, y2, z1 et/ou z2 sont en particulier tels que :
y1 est tel que 0 < y1 ≤ 1 ;
   ou
z1 est tel que 0 < z1 ≤ 1 ;
   ou
y2 est tel que 0 < y2 ≤ 1
   ou
z2 est tel que 0 < z2 ≤ 1
   ou
y1 est tel que 0 < y1 ≤ 1 ; et
y2 est tel que 0 < y2 ≤ 1 ;
   ou
z1 est tel que 0 ≤ z1 ≤ 1 ; et
z2 est tel que 0 < z2 ≤ 1 ;
   ou
y1 est tel que 0 < y1 ≤ 1 ;
y2 est tel que 0 < y2 ≤ 1 ;
z1 est tel que 0 < z1 ≤ 1 ; et
z2 est tel que 0 < z2 ≤ 1.

### EXEMPLES

### Exemple 1 :

Une préforme de l'ordre de 1m de longueur par 10 cm de diamètre est obtenue par dépôt en phase vapeur, par exemple selon l'une des techniques décrites par F. Mitschke (Manufacturing and Mechanical Properties. In Fiber Optics (pp. 101-116). Springer, Berlin, Heidelberg (2016)), sur un fil d'acier inoxydable (du centre vers l'extérieur) :
- D'une couche de matériau d'électrode positive de formule 70,3V₂O₅-10P₂O₅-10Fe₂O₃-10,7Li₂O à partir d'un mélange de précurseurs V₂O₅, P₂O₅, Fe₂O₃ et Li₂CO₃ sous forme de poudres, fondus à 1273°K (T. Aoyagi et al., Mater. Res. Soc. Symp. Proc. Vol. 1643 (2014)) ;
- D'une couche d'électrolyte solide de formule Li₄SiO₄ ;
- D'une couche de matériau d'électrode négative de formule SiO.

Cette préforme est ensuite étiré par gravité puis action mécanique dans une tour d'étirage comprenant un four permettant de la chauffer à 2000°C environ, jusqu'à atteindre par exemple une longueur de l'ordre de 1000 km de fibre d'un diamètre de l'ordre de la centaine de microns (F. Mitschke, *ibid.*)*.*

Après étirage de la préforme, un collecteur de courant extérieur peut être ajouté si désiré (par exemple, par chemisage d'un métal, ou passage dans un bain de métal fondu). Une couche de résine protectrice peut enfin être ajoutée.

En l'absence de collecteur de courant (ci-dessus le fil d'acier inoxydable), la préforme de l'invention peut être obtenue à partir d'un tube de quartz (par exemple dont l'épaisseur est suffisamment faible par rapport au diamètre total), par dépôt en phase vapeur à l'intérieur dudit tube. On parle alors d' « inside vapor déposition » au lieu d' « outside vapor déposition ».

### Exemple 2 :

Une préforme, de manière analogue à l'exemple 1, est obtenue par dépôt en phase vapeur, sur un fil d'aluminium (du centre vers l'extérieur) :
- D'une couche de matériau d'électrode négative de formule SiO,
- D'une couche d'électrolyte solide de formule Li₄SiO₄.

Après étirage de la préforme (de façon analogue à l'exemple 1, l'électrode positive puis, si désiré, le collecteur de courant extérieur, sont ajoutés par passage de la fibre dans un bain ou par extrusion. Une couche de résine protectrice peut enfin être ajoutée.

## Revendications

1. Cellule de batterie filaire constituée de ou comprenant :
(i) une électrode filaire positive constituée de ou comprenant un matériau de formule (I) suivante :
(A₂O)ₐ₁-(A'O)ₐ₂-(M_{y1}O_{y2})_{b}-(M'_{z1}O_{z2})_{c} (I),
dans laquelle :
y1 est tel que 0 ≤ y1 ≤ 1 ;
y2 est tel que 0 ≤ y2 ≤ 1 ;
z1 est tel que 0 ≤ z1 ≤ 1 ;
z2 est tel que 0 ≤ z2 ≤ 1 ;
a1 est tel que 0 ≤ a1 ≤ 1 ;
a2 est tel que 0 ≤ a2 ≤ 1, avec a1 et a2 n'étant pas simultanément 0 ;
b est tel que 0 < b ≤ 1 ;
c est tel que 0 < c ≤ 1 ;
A est choisi parmi Li, Na et K ;
A' est Mg ou Ca ;
M est choisi parmi B, Al, Si, P, S, Se et leurs combinaisons;
M' est choisi parmi les métaux de transition, notamment Ti, V, Cr, Mn, Fe, Co, Ni,
Cu, Nb, Mo, et W ; Zn ; Pb et leurs combinaisons ;
(ii) une couche d'électrolyte solide positionnée autour d'au moins une partie de l'électrode filaire positive i), constituée de ou comprenant :
• un matériau de formule (IIa) suivante :
Li₄SiO₄ (IIa),
• un composé du système Li₂O-SiO₂-P₂O₅,
• un composé du système Li₃PO₄-N₂-SiO₂,
• un matériau de formule (IIb) suivante :
LiTi₂(PO₄)₃ (IIb),
ce matériau étant éventuellement dopé, notamment avec Al, le matériau dopé étant par exemple de formule Li_{1.3}Ti_{1.7}Al_{0.3}P₃O₁₂ ;
(iii) une couche d'électrode négative positionnée autour d'au moins une partie de la couche d'électrolyte solide ii), constituée de ou comprenant un matériau choisi parmi :
- les matériaux de formule (III) suivante :
SiOₓ (III),
avec x tel que 0<x<2, en particulier 0,5<x<1,6, plus particulièrement 0,8<x<1,2, x étant notamment de 1 ;
- le lithium métal ;
- les composés du systèmes Li_{w}Si : LiO₂, avec w>0, lesquels comprennent optionnellement, en sus, du titane, ledit composé étant notamment de formule Li₂TiSiO₅ ; du fluorophosphate d'étain ; et
- le carbone amorphe.

2. Cellule de batterie filaire constituée de ou comprenant :
(i) une électrode négative filaire, constituée de ou comprenant un matériau choisi parmi :
- les matériaux de formule (III) suivante :
SiOₓ (III),
avec x tel que 0<x<2, en particulier 0,5<x<1,6, plus particulièrement 0,8<x<1,2, x étant notamment de 1 ;
- le lithium métal ;
- les composés du systèmes Li_{w}Si : LiO₂, avec w>0, lesquels comprennent optionnellement, en sus, du titane, ledit composé étant notamment de formule Li₂TiSiO₅ ; du fluorophosphate d'étain ; et
- le carbone amorphe.
(ii) une couche d'électrolyte solide positionnée autour d'au moins une partie de l'électrode filaire négative i), constituée de ou comprenant :
• un matériau de formule (IIa) suivante :
Li₄SiO₄ (IIa),
• un composé du système Li₂O-SiO₂-P₂O₅,
• un composé du système Li₃PO₄-N₂-SiO₂,
• un matériau de formule (IIb) suivante :
LiTi₂(PO₄)₃ (IIb),
ce matériau étant éventuellement dopé, notamment avec Al, le matériau dopé étant par exemple de formule Li_{1.3}Ti_{1.7}Al_{0.3}P₃O₁₂ ;
(iii) une couche d'électrode positive positionnée autour d'au moins une partie de la couche d'électrolyte solide (ii), constituée de ou comprenant un matériau de formule (I) suivante :
(A₂O)ₐ₁-(A'O)ₐ₂-(M_{y1}O_{y2})_{b}-(M'_{z1}O_{z2})_{c} (I),
dans laquelle :
y1 est tel que 0 ≤ y1 ≤ 1 ;
y2 est tel que 0 ≤ y2 ≤ 1 ;
z1 est tel que 0 ≤ z1 ≤ 1 ;
z2 est tel que 0 ≤ z2 ≤ 1 ;
a1 est tel que 0 ≤ a1 ≤ 1 ;
a2 est tel que 0 ≤ a2 ≤ 1, avec a1 et a2 n'étant pas simultanément 0 ;
b est tel que 0 < b ≤ 1 ;
c est tel que 0 < c ≤ 1 ;
A est choisi parmi Li, Na et K ;
A' est Mg ou Ca ;
M est choisi parmi B, Al, Si, P, S, Se et leurs combinaisons;
M' est choisi parmi les métaux de transition, notamment Ti, V, Cr, Mn, Fe, Co, Ni,
Cu, Nb, Mo, et W ; Zn ; Pb et leurs combinaisons.

3. Cellule de batterie filaire selon la revendication 1, dans laquelle l'électrode filaire (i) renferme un collecteur de courant intérieur filaire (i₀), et/ou dans laquelle une couche de collecteur de courant externe (iv) est positionnée autour d'au moins une partie de la couche d'électrode (iii),
le ou les collecteurs de courant étant en particulier constitués de ou comprenant un matériau choisi parmi Al, Cu, Pt, Au, Ag, acier, notamment acier inoxydable, et oxyde d'indium-étain (ITO).

4. Cellule de batterie filaire selon l'une quelconque des revendications précédentes, dans laquelle une couche protectrice (v) est positionnée autour d'au moins une partie de la couche d'électrode négative ou positive (iii), ou, lorsqu'elle existe, d'au moins une partie de la couche de collecteur de courant extérieur filaire (iv),
la couche protectrice (v) étant notamment une couche isolante, en particulier une couche isolante de résine.

5. Cellule de batterie filaire selon l'une quelconque des revendications précédentes, dans laquelle la plus grande dimension de sa coupe transversale est comprise de 5 µm à 5 mm, la cellule de batterie filaire ayant en particulier un profil en coupe transversale circulaire.

6. Batterie comprenant au moins une cellule de batterie filaire selon l'une quelconque des revendications précédentes, ladite batterie comprenant notamment un composant alimentable ayant au moins un ensemble de contacts électriques positif et négatif, les électrodes de la au moins une cellule, ou les collecteurs de courant lorsqu'ils existent, étant interconnectés à l'ensemble de contacts électriques positif et négatif, formant ainsi un circuit complet.

7. Procédé de préparation d'une cellule de batterie filaire selon la revendication 1 ou 2, en particulier selon la revendication 1, comprenant :
- une étape (A) d'étirage d'une préforme constituée de ou comprenant les éléments (i), (ii), (iii), et, le cas échéant (i₀), tels que définis pour la cellule ; et
- optionnellement, une étape (B) de formation de la couche (iv) autour de la couche (iii), par exemple par chemisage ou passage dans un bain d'un matériau choisi parmi Al, Cu, Pt, Au, Ag, acier, notamment acier inoxydable, et oxyde d'indium-étain (ITO), fondu, ou extrusion.

8. Procédé de préparation d'une cellule de batterie filaire selon la revendication 1 ou 2, en particulier selon la revendication 2, comprenant :
- une étape (A') d'étirage d'une préforme constituée de ou comprenant les éléments (i), (ii), et, le cas échéant (i₀), tels que définis pour la cellule ;
- une étape (B') de formation de la couche (iii) autour de la couche (ii), par exemple par passage dans un bain de composé de formule (I) ou (III), fondu, ou par extrusion ; et
- optionnellement, une étape (C') de formation de la couche (iv) autour de la couche (iii), par exemple par chemisage ou passage dans un bain d'un matériau choisi parmi Al, Cu, Pt, Au, Ag, acier, notamment acier inoxydable, et oxyde d'indium-étain (ITO), fondu, ou extrusion.

9. Procédé selon la revendication 8, dans lequel l'étirage se fait :
- à une température allant de 1500 à 2500°C, par exemple à environ 2000°C ; et/ou
- par gravité et/ou action mécanique, en particulier par gravité puis action mécanique.

10. Préforme constituée de ou comprenant :
(i) une électrode positive constituée de ou comprenant un matériau de formule (I) suivante :
(A₂O)ₐ₁-(A'O)ₐ₂-(M_{y1}O_{y2})_{b}-(M'_{z1}O_{z2})_{c} (I),
dans laquelle :
y1 est tel que 0 ≤ y1 ≤ 1 ;
y2 est tel que 0 ≤ y2 ≤ 1 ;
z1 est tel que 0 ≤ z1 ≤ 1 ;
z2 est tel que 0 ≤ z2 ≤ 1 ;
a1 est tel que 0 ≤ a1 ≤ 1 ;
a2 est tel que 0 ≤ a2 ≤ 1, avec a1 et a2 n'étant pas simultanément 0 ;
b est tel que 0 < b ≤ 1 ;
c est tel que 0 < c ≤ 1 ;
A est choisi parmi Li, Na et K ;
A' est Mg ou Ca ;
M est choisi parmi B, Al, Si, P, S, Se et leurs combinaisons;
M' est choisi parmi les métaux de transition, notamment Ti, V, Cr, Mn, Fe, Co, Ni,
Cu, Nb, Mo, et W ; Zn ; Pb et leurs combinaisons;
(ii) une couche d'électrolyte solide positionnée autour d'au moins une partie de l'électrode filaire positive i), constituée de ou comprenant :
• un matériau de formule (IIa) suivante :
Li₄SiO₄ (IIa),
• un composé du système Li₂O-SiO₂-P₂O₅,
• un composé du système Li₃PO₄-N₂-SiO₂,
• un matériau de formule (IIb) suivante :
LiTi₂(PO₄)₃ (IIb),
ce matériau étant éventuellement dopé, notamment avec Al, le matériau dopé étant par exemple de formule Li_{1.3}Ti_{1.7}Al_{0.3}P₃O₁₂ ;
(iii) une couche d'électrode négative positionnée autour d'au moins une partie de la couche d'électrolyte solide ii), constituée de ou comprenant un matériau choisi parmi :
- les matériaux de formule (III) suivante :
SiOₓ (III),
avec x tel que 0<x<2, en particulier 0,5<x<1,6, plus particulièrement 0,8<x<1,2, x étant notamment de 1 ;
- le lithium métal ;
- les composés du systèmes Li_{w}Si : LiO₂, avec w>0, lesquels comprennent optionnellement, en sus, du titane, ledit composé étant notamment de formule Li₂TiSiO₅ ; du fluorophosphate d'étain ; et
- le carbone amorphe ;
dont la plus grande dimension de sa coupe transversale est comprise de 1 cm à 30 cm, en particulier environ 10 cm.

11. Préforme constituée de ou comprenant :
(i) une électrode négative, constituée de ou comprenant un matériau choisi parmi :
- les matériaux de formule (III) suivante :
SiOₓ (III),
avec x tel que 0<x<2, en particulier 0,5<x<1,6, plus particulièrement 0,8<x<1,2, x étant notamment de 1 ;
- le lithium métal ;
- les composés du systèmes Li_{w}Si : LiO₂, avec w>0, lesquels comprennent optionnellement, en sus, du titane, ledit composé étant notamment de formule Li₂TiSiO₅ ; du fluorophosphate d'étain ; et
- le carbone amorphe.
(ii) une couche d'électrolyte solide positionnée autour d'au moins une partie de l'électrode filaire négative i), constituée de ou comprenant :
• un matériau de formule (IIa) suivante :
Li₄SiO₄ (IIa),
• un composé du système Li₂O-SiO₂-P₂O₅,
• un composé du système Li₃PO₄-N₂-SiO₂,
• un matériau de formule (IIb) suivante :
LiTi₂(PO₄)₃ (IIb),
ce matériau étant éventuellement dopé, notamment avec Al, le matériau dopé étant par exemple de formule Li_{1.3}Ti_{1.7}Al_{0.3}P₃O₁₂ ;
(iii) optionnellement, une couche d'électrode positive positionnée autour d'au moins une partie de la couche d'électrolyte solide (ii), constituée de ou comprenant un matériau de formule (I) suivante :
(A₂O)ₐ₁-(A'O)ₐ₂-(M_{y1}O_{y2})_{b}-(M'_{z1}O_{z2})_{c} (I),
dans laquelle :
y1 est tel que 0 ≤ y1 ≤ 1 ;
y2 est tel que 0 ≤ y2 ≤ 1 ;
z1 est tel que 0 ≤ z1 ≤ 1 ;
z2 est tel que 0 ≤ z2 ≤ 1 ;
a1 est tel que 0 ≤ a1 ≤ 1 ;
a2 est tel que 0 ≤ a2 ≤ 1, avec a1 et a2 n'étant pas simultanément 0 ;
b est tel que 0 < b ≤ 1 ;
c est tel que 0 < c ≤ 1 ;
A est choisi parmi Li, Na et K ;
A' est Mg ou Ca ;
M est choisi parmi B, Al, Si, P, S, Se et leurs combinaisons;
M' est choisi parmi les métaux de transition, notamment Ti, V, Cr, Mn, Fe, Co, Ni,
Cu, Nb, Mo, et W ; Zn ; Pb et leurs combinaisons;
dont la plus grande dimension de sa coupe transversale est comprise de 1 cm à 30 cm, en particulier environ 10 cm.

12. Procédé de préparation d'une préforme selon la revendication 10 ou 11, par dépôt des différentes couches en phase vapeur, notamment par des étapes de dépôt en phase vapeur choisies parmi le dépôt externe en phase vapeur (OVD), dépôt chimique en phase vapeur modifié (MCVD), dépôt chimique en phase vapeur plasma (PCVD), dépôt axial en phase vapeur (VAD).
